# EUROPÄISCHE PATENTSCHRIFT

(11) **EP 2 897 872 B1**
(45) Veröffentlichungstag und Bekanntmachung des Hinweises auf die Patenterteilung: **13.12.2017**
(21) Anmeldenummer: 13753813.8
(22) Anmeldetag: 24.08.2013
(51) Int. Cl.: B65C 9/00, B65G 47/84, B67C 3/22, F16B 21/18

(54) **WERKZEUGLOSER AUSTAUSCH VON FORMATTEILEN**
TOOL-LESS REPLACEMENT OF FORMAT PARTS
REMPLACEMENT SANS OUTIL DE PIÈCES DE FORMAT

(30) Priorität: 21.09.2012 DE 102012108953
(43) Veröffentlichungstag der Anmeldung: 29.07.2015
(73) Patentinhaber: KHS GmbH, 44143 Dortmund (DE)
(72) Erfinder: WOLF, Uwe, 55593 Rüdesheim (DE)
(86) Internationale Anmeldenummer: PCT/EP2013/002553
(87) Internationale Veröffentlichungsnummer: WO 2014/044351

(56) Entgegenhaltungen:
- EP-A2- 2 213 579
- WO-A1-2010/127700
- DE-A1- 4 436 201
- DE-A1-102009 018 731
- GB-A- 2 347 171
- US-A- 3 507 528
- US-A- 3 596 554

## Beschreibung

Die Erfindung betrifft eine Behälterbehandlungsanlage umfassend ein Formatteil, das über zumindest ein Verbindungselement mit einem Aufnahmeelement verbindbar ist.

Derartige Formatteile sind zum Beispiel in Flaschenbehandlungsmaschinen einsetzbar. Ein solches Formatteil ist ein flaschenabhängiges Bauteil der Flaschenbehandlungsmaschine, welches passend für eine oder mehrere Flaschen wechselbar ist. Flaschenbehandlungsmaschinen können Befüller, Verschließer, Etikettierer oder dergleichen aufweisen, welche zum Beispiel rotierend Flaschen transportieren.

Die Formatteile sind jeweils an bestimmte Flaschendurchmesser und - höhen angepasst ausgeführt. Die Verbindungselemente sind zum einen mit dem Aufnahmeelement und zum anderen mit dem Formatteil verbunden. Hierzu ist üblicherweise jeweils eine Schraubverbindung vorgesehen, was bedeutet, dass die einander beabstandeten Elemente formschlüssig über die Verbindungselemente miteinander verbunden sind.

Mit einer Flaschenbehandlungsmaschine können mehrere Flaschen behandelt werden, welche unterschiedliche Höhen oder z.B. in ihrem Bauchbereich auch unterschiedliche Durchmesser aufweisen können. Selbstverständlich durchlaufen die Flaschenbehandlungsmaschinen üblicherweise Flaschenserien mit gleichen Abmessungen. Bei einem Wechsel auf eine neue Flaschenserie mit den genannten unterschiedlichen Abmessungen müssen die Formatteile an die neuen Abmessungen angepasst werden. Dies geschieht üblicherweise mit einem Austausch der jeweiligen Formatteile.

Diese ist jedoch, wie oben beschrieben, über die Verbindungselemente formschlüssig mit dem Aufnahmeelement verbunden, also verschraubt. Zum Austausch müssen daher die jeweiligen Schraubverbindungen gelöst werden, wozu derzeit ein Werkzeugeinsatz notwendig ist. Das Lösen jeder einzelnen Schraubverbindung ist sehr zeitintensiv, und wirkt sich somit nachteilig auf die Verfügbarkeit der Flaschenbehandlungsmaschine aus. Zudem muss das vorhandene Formatteile durch ein an die neuen Abmessungen der Flaschenserie angepasstes Formatteil ausgetauscht werden, so dass wiederum der erhebliche Zeitaufwand zum Herstellen der Schraubverbindungen anfällt. Insofern ist ein erheblicher Zeitaufwand zur Umrüstung notwendig, welcher nicht nur enorme Personalkosten bewirkt, sondern auch die Flaschenbehandlungsmaschine stillsetzt, so dass die Produktion z.B. das Abfüllen oder das Etikettieren und alle vor oder nachgeschalteten Schritte unterbrochen sind.

Um das auszutauschende Formatteil zu demontieren oder zu montieren sind genau einzuhaltende Parameter auszuführen, was bedeutet, dass hier ein hohes Fehlerpotential vorhanden ist. Nachteilig ist aber auch, dass der Behälter bzw. die Flasche das Formatteil quasi verriegelt, so dass das Formatteil bei nicht korrekt geführten Flaschen (crash) nicht entfernt werden kann, da das Formatteil nur in Radialrichtung, also quer zur Hochachse der Flaschenbehandlungsmaschine entfernbar ist.

Aus der US 6,786,669 B2 und der US 3,596,554 A sind Srhnellöffnungsbolzen (Quick release pin) bekannt. Die GB2 347 171 A, WO 2010/127700 A1 und US 3,507,528 A offenbaren Kugelverrastungen aus verschiedenen technischen Bereichen.

Verbindungselemente zum Koppeln von Formatteilen an entsprechenden Behälterbehandlungsvorrichtungen sind aus der EP 2 213 579 A2 bekannt. Weiter ist in der DE 10 2009 018 731 A1 ein Führungselement beschrieben, das Führungsteilelemente aufweist, welche über zumindest ein Verbindungselement miteinander verbindbar sind. Die DE 44 35 201 A1 offenbart eine Behälterbehandlungsanlage gemäß dem Oberbegriff des Anspruchs 1, mit einem Verbindungselement zum Koppeln von Formatteilen.

Das zumindest eine Verbindungselement weist ein erstes Verbindurrgsteilelement und ein zweites Verbindungsteilelement auf, wobei das eine Verbindungsteilelement eine verriegelbare Aufnahme aufweist, in welche das andere Verbindungsteilelement mit seiner an die Aufnahme korrespondierend ausgeführten Steckseite einsteckbar ist, so dass das eine Verbindungsteilelement an dem anderen Verbindungsteilelement kraftschlüssig lagesicher gehalten ist, wenn die verriegelbare Aufnahme verriegelt ist. Damit wird ein Führungselement zur Verfügung gestellt, deren Führungsteilelemente, also das Halsführungselement und die wechselbare Sternplatte lediglich durch eine Steckverbindung der beiden Verbindungsteilelemente miteinander verbunden sind, wobei die Lagesicherung kraftschlüssig mittels der verriegelbaren Aufnahme hergestellt wird. Im Unterschied zum vorbeschriebenen Stand der Technik ist zum Auswechseln zum Beispiel der wechselbaren Sternplatte nur noch das Entriegeln der verriegelbaren Aufnahme erforder-lich, so dass das in der Aufnahme eingesteckte Verbindungsteilelement einfach aus der Aufnahme herausziehbar ist. Zudem ist die verriegelbare Aufnahme dabei werkzeuglos betätigbar. Lediglich wenn die verriegelbare Aufnahme verklemmt ist, kann eine Löse- bzw. Schlaghilfe zum unterstützenden Lösen zu Hilfe genommen werden. Zum unterstützenden Lösen reichen aber wenige Schläge, wodurch der Wechselaufwand bzw. Löseaufwand der miteinander kraftschlüssig verbundenen Verbindungsteilelemente nicht sonderlich negativ beeinflusst wird. Grundsätzlich kann die verriegelbare Aufnahme vorteilhaft manuell werkzeuglos betätigt werden. Der Gegenstand der DE 10 2009 018 739 A1 hat sich in der Praxis bewährt.

Der Erfindung liegt die Aufgabe zugrunde, eine Behälterbehandlungsanlage der Eingangs genannten Art anzugeben, dessen Formatteil in noch einfacherer Weise, werkzeuglos und zeitsparend wechselbar ist, wobei das betreffende Verbindungselement hinsichtlich hygienischer Anforderungen verbessert ist.

Erfindungsgemäß wird die Aufgabe durch eine Behälterbehandlungsanlage mit den Merkmalen des Anspruchs 1 gelöst.

Der Sperrbolzen weist in günstiger Ausgestaltung seine Verbindungsseite und eine dazu gegenüber liegende Betätigungsseite auf. An der Verbindungsseite sind Sperrelemente in der bevorzugten Ausgestaltung als Sperrkugeln oder als Sperrriegel angeordnet, wobei an der Betätigungsseite ein Betätigungselement angeordnet ist. Das Verbindungselement kann im Folgenden auch als Kugelsperrbolzen oder auch als Sperrbolzen bezeichnet werden. Zwischen der Betätigungsseite und der Verbindungsseite ist ein Hohlkörper angeordnet, durch welchen sich ein Betätigungsmechanismus zum Ver- und Entriegeln der Sperrkugeln oder Sperrriegel erstreckt. Das Verbindungselement kann in günstiger Ausführung aus einem Edelstahl gebildet sein.

In günstiger Ausgestaltung ist das Betätigungselement als Druckknopf ausgeführt. Wird der Druckknopf betätigt, werden die Sperrkugeln oder -riegel entriegelt. Wird der Druckknopf wieder losgelassen, werden die Sperrkugeln oder -riegel verriegelt.

Damit das Formatteil von dem Verbindungselement durchgriffen werden kann, ist in sinnvoller Ausgestaltung an dem Formatteil zumindest eine Durchgriffsbohrung vorgesehen.

Zweckmäßig ist, wenn das Verbindungselement in der Ausgestaltung als Kugelsperrbolzen oder Sperrbolzen das zu wechselnde Formatteil durchgreift, wobei durch den erfindungsgemäßen Hohlkörper sich der Kugelsperrbolzen erstrecken kann. Der Hohlkörper kann zwischen Bauelementen des Formatteils angeordnet sein, wobei ein oberes Bauelement z.B. an die Dimensionen eines Flaschenhalses angepasst ist, und wobei ein unteres Bauelement z.B. an die Dimensionen eines Flaschenbauches angepasst sein kann. Der Hohlkörper kann aber auch so ausgeführt sein, dass dieser beide Bauelemente durchgreift. In bevorzugter Ausgestaltung ist der Hohlkörper als Hohlzylinder aus einem Edelstahl gebildet, und kann die Funktion eines Abstandselementes für die beiden Bauelemente ebenso übernehmen wie die Funktion eines Schutzrohres für das Verbindungselement. Natürlich können auch separate Abstandselemente vorgesehen werden. Mittels des Hohlkörpers, aber auch mittels der Abstandselemente ist das Formatteil mit seinen beiden Bauelementen vormontierbar, so dass nur noch das Verbindungselement durch den Hohlkörper in Richtung zum Aufnahmeelement geführt werden muss. Eine solche Ausgestaltung ist auch deswegen sinnvoll, weil so eine besondere Reihenfolge zur Demontage und Montage mehrerer Bauteile vermieden ist, wobei die Vormontage außerhalb der Behälterbehandlungsanlage durchgeführt werden kann. Insbesondere hinsichtlich der beengten Platzverhältnisse innerhalb der Behälterbehandlungsanlage ist dies vorteilhaft.

In zweckmäßiger Ausgestaltung ist das Rastelement hülsenartig in der Art eines Hohlzylinders mit einer oben angeordneten Rastkante ausgeführt, wobei sich die Rastkante radial in Richtung zu einem Mittelpunkt so erstreckt, dass eine Durchgriffsöffnung für die Verbindungsseite des Kugelsperrbolzens gebildet ist. Die Rastkante kann in bevorzugter Ausgestaltung nach unten versetzt sein, so dass ein nach oben orientierter Anschlag gebildet ist, an welchen sich das untere freie Ende des Hohlkörpers anlegen kann, wobei der Außenumfang des Hohlkörpers an dem Innenumfang des Rastelementes anliegen kann. Der Anschlag kann zudem als Bewegungsbegrenzung angesehen werden, an welcher das freie Ende des Hohlkörpers, durch welchen sich das Verbindungselement erstreckt, merklich wahrnehmbar, z.B. Hörbar anschlägt, so dass die Bedienperson einer genügenden Einstecktiefe sicher sein kann. In dieser Position kann der Druckknopf freigegeben werden, so dass die Sperrelemente hinter die Rastkante greifen und sich dort lagesicher anlegen können.

Zum Verbinden des Formatteiles mit der Behälterbehandlungsanlage wird einfach der Kugelsperrbolzen entriegelt, wobei der Druckknopf gehalten bleibt. Die Verbindungsseite wird in das Rastelement eingeführt, wobei sodann der Druckknopf losgelassen wird, so dass die Sperrkugeln oder -riegel verriegeln, sich also hinter die Rastkante legen.

Das Verbindungselement weist an seiner Betätigungsseite einen Flanschfortsatz auf, mit welchem der Kugelsperrbolzen an der Oberfläche des Formatteils auflegbar ist, so dass quasi ein Widerlager für das Verbindungselement gebildet ist. So ist das Verbindungselement unter Vorspannung gehalten, so dass das Formatteil lagesicher an der Behälterbehandlungsanlage montiert ist.

Natürlich können mehrere Verbindungselemente vorgesehen werden.

Mit der Erfindung ist das Formatteil werkzeuglos und zeitsparend auswechselbar, also demontierbar oder montierbar, da lediglich die Verbindungselemente, also die Kugelsperrbolzen betätigt werden müssen. Somit entfällt eine zeitraubende Schraubverbindung. Zudem kann das Formatteil vormontiert eingesetzt werden, was sich ebenfalls zeitsparend auswirkt. Weiter kann das Formatteil parallel zur Hochachse der Behälterbehandlungsanlage, also in Vertikalrichtung montiert oder demontiert werden. Dies ist bei einem Crash sehr vorteilhaft, da das Formatteil so einfach nach oben hin orientiert entfernt werden kann, so dass der Crashverursacher leicht entfernbar ist. Das Formatteil kann aus mehreren Segmenten bestehen, so dass im Crashfalle gegebenenfalls lediglich das betreffende Segmentbauteil montiert oder demontiert werden muss. Auch bei einem vollständigen Wechsel des Formatteils ist die Segmentbauweise sehr vorteilhaft, da so das Handling der einzelnen Segmente leichter zu bewerkstelligen ist. Das Verbindungselement ist aus hygienischer Hinsicht vollständig in dem Hohlkörper eingehaust, wobei beide Elemente, aber auch das Rastelement aus einem Edelstahl gebildet sind. Die Sperrbolzen werden zum raschen Fixieren, Arretieren, Verstellen, Wechseln und Sichern des Formatteils eingesetzt. Vorteilhaft ist, dass die Sperrbolzen für häufig wiederholende Verbindungen schnell und einfach lösbar (Drücken = Entriegeln) sind. Der jeweilige Sperrbolzen ist extrem belastbar, da dieser aus hochfesten, gehärteten und verschleißfesten Werkstoff besteht. Die Scherfestigkeit ist abhängig vom Werkstoff, der Baugröße und der Anzahl der Kugeln. Die Scherfestigkeit basiert auf ca.60% des Grenzwertes der Zugfestigkeit des Werkstoffes.

Weitere vorteilhafte Ausgestaltungen der Erfindung sind in den Unteransprüchen und der folgenden Figurenbeschreibung offenbart. Es zeigen
- Fig. 1: einen Ausschnitt einer Behälterbehandlungsanlage in einer perspektivischen Ansicht,
- Fig. 2: einen Ausschnitt eines Formatteil als Einzelheit welches mittels einem Verbindungselement mit der Behälterbehandlungsanlage verbunden ist,
- Fig. 3: den Ausschnitt aus Figur 2, bei welchem das Verbindungselement betätigt wird,
- Fig. 4: den Ausschnitt aus Figur 2, bei welchem das Verbindungselement aus dem Rastelement gelöst ist,
- Fig. 5: einen vergrößerten Ausschnitt aus Figur 4 mit dem Rastelement und der Verbindungsseite, und
- Fig. 6: einen vergrößerten Ausschnitt aus Figur 2 mit dem Rastelement und der Verbindungsseite,
- Fig. 7: einen vergrößerten Ausschnitt aus Figur 3 mit dem Rastelement und der Verbindungsseite, und
- Fig. 8: ein Verbindungselement als Einzelheit.

In den unterschiedlichen Figuren sind gleiche Teile stets mit denselben Bezugszeichen versehen, weswegen diese in der Regel auch nur einmal beschrieben werden.

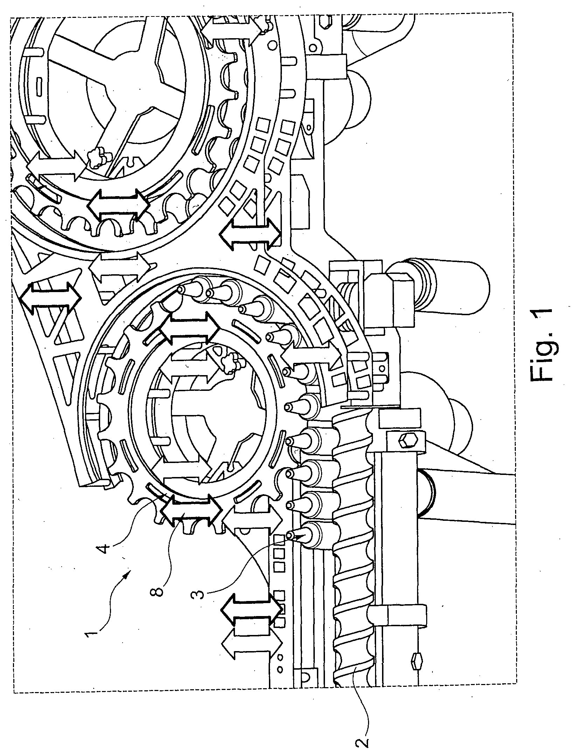

Figur 1 zeigt eine Behälterbehandlungsanlage 1, welche einen Schneckenförderer 2 aufweist, mit welchem Behälter 3, z.B. Flaschen zu einem Transportstern 4 gefördert werden. Solche Behälterbehandlungsanlagen sind allgemein bekannt, so dass nicht weiter darauf eingegangen wird.

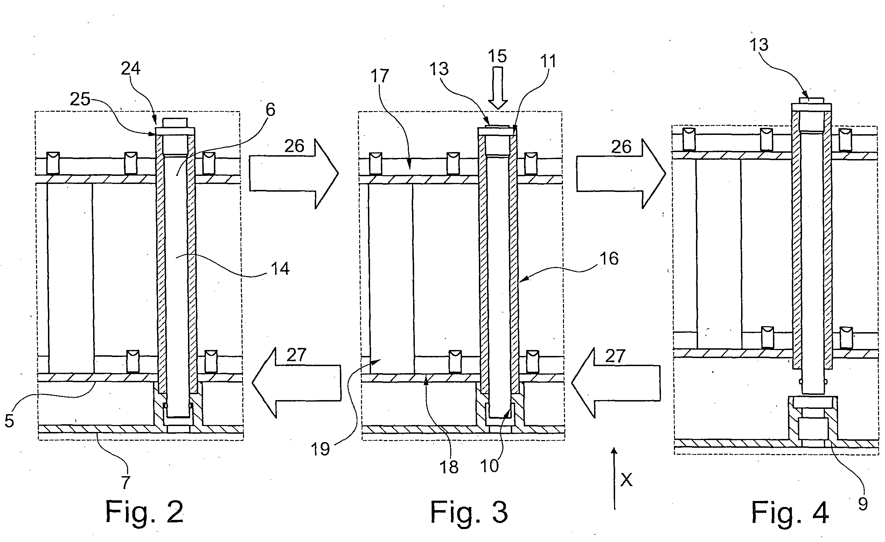

Die Behälterbehandlungsanlage 1 weist zumindest ein Formatteil 5 (Figuren 2 bis 4) auf, das über zumindest ein Verbindungselement 6 mit einem Aufnahmeelement 7 verbindbar ist. Die betreffenden Formatteile 5 sind an unterschiedliche Behälterdimensionen ausgeführt, weswegen diese bei einem Behälterserienwechsel montiert und demontiert werden. Dies ist in Figur 1 mittels der Pfeile 8 dargestellt, wobei ersichtlich ist, dass die Formatteile 5 parallel zu einer Hochachse X der Behälterbehandlungsanlage, also in Vertikalrichtung montierbar und demontierbar sind.

Das Verbindungselement 6 ist als Sperrbolzen 6, bevorzugt als Kugelsperrbolzen 6 ausgeführt ist, wobei an dem Aufnahmeelement 7 ein Rastelement 9 vorgesehen ist, wobei das Verbindungselement 6 das Formatteil 5 durchgreift, und wobei das Verbindungselement 6 mit seiner Verbindungsseite 10 mit dem Rastelement 9 lösbar verbindbar ist, und wobei das Formatteil 5 parallel zur Hochachse X der Behälterbehandlungsanlage 1 montierbar und demontierbar ist.

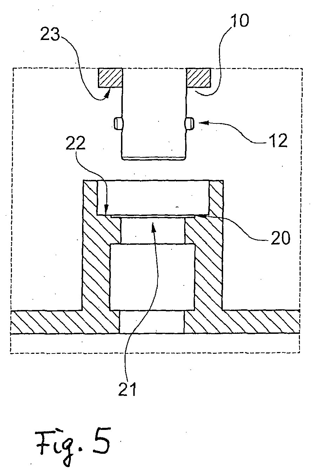

Der Kugelsperrbolzen 6 weist in günstiger Ausgestaltung seine Verbindungsseite 10 und eine dazu gegenüber liegende Betätigungsseite 11 auf. An der Verbindungsseite 10 sind die Sperrelemente 12 in der beispielhaften Ausgestaltung als Sperrkugeln 12 (Figur 5) angeordnet, wobei an der Betätigungsseite 11 ein Betätigungselement 13 angeordnet ist. Zwischen der Betätigungsseite 11 und der Verbindungsseite 10 ist ein Hohlkörper 14 angeordnet, durch welchen sich ein Betätigungsmechanismus zum Ver- und Entriegeln der Sperrkugeln 12 erstreckt.

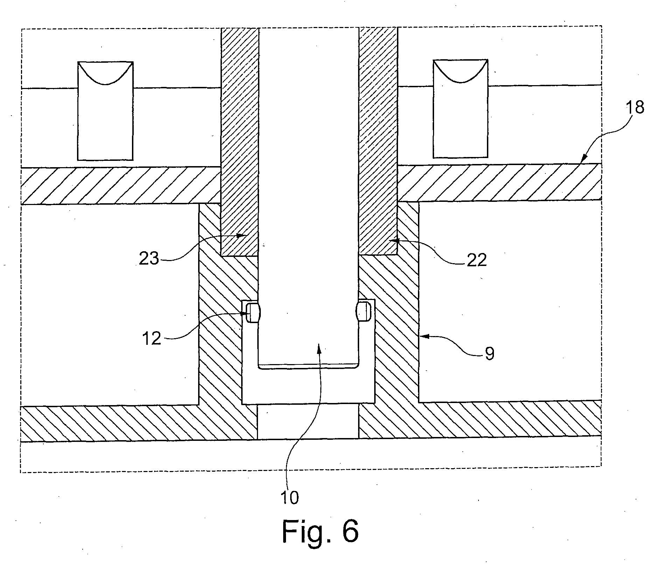

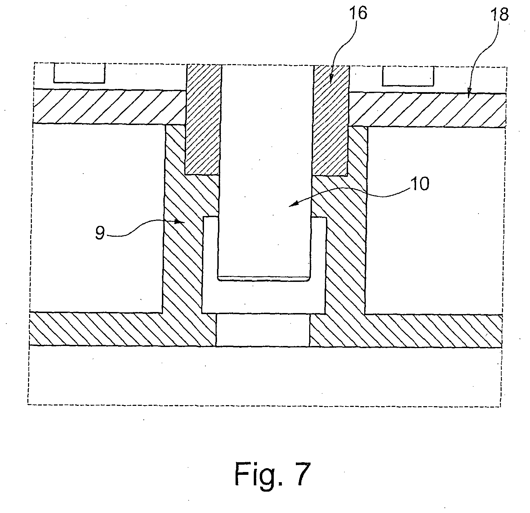

Wie in Figur 3 zu erkennen, ist das Betätigungselement 13 als Druckknopf ausgeführt. Wird der Druckknopf betätigt, werden die Sperrkugeln 12 entriegelt (Figur 7). Eine Betätigung des Betätigungselementes 13 ist mittels des Pfeils 15 dargestellt. Wird der Druckknopf wieder losgelassen, werden die Sperrkugeln 12 verriegelt (Figuren 5 und 6). Sind die Sperrkugeln 12 entriegelt, kann der Kugelsperrbolzen 6 aus dem Rastelement 9 gehoben werden (Figur 5), da die Sperrkugeln 12 aus ihrer sperrenden Position gebracht sind, und dort durch Herabdrücken des Druckknopfes gehalten werden. So kann das Formatteil 5 von der Behälterbehandlungsmaschine getrennt werden, wie in Figur 4 erkennbar und in Figur 5 angedeutet ist.

In den Figuren 2 bis 4 ist erkennbar, dass das Verbindungselement 6 in der Ausgestaltung als Kugelsperrbolzen das zu wechselnde Formatteil 5 durchgreift, wobei noch ein Hohlkörper 16 vorgesehen ist, durch welchen sich der Kugelsperrbolzen 6 erstreckt. Der Hohlkörper 16 überragt das Bauelement 17,18 des Formatteils 5, wobei ein oberes Bauelement 17 z.B. an die Dimensionen eines Flaschenhalses angepasst ist, und wobei ein unteres Bauelement 18 z.B. an die Dimensionen eines Flaschenbauches angepasst sein kann.

In der Zeichnungsebene ist jeweils am linken Rand der jeweiligen Figuren 2 bis 4 noch ein separates Abstandselement 19 erkennbar. Mittels des Hohlkörpers 16, und/oder auch mittels der Abstandselemente 19 ist das Formatteil 5 mit seinen beiden Bauelementen 17,18 vormontierbar, so dass zur Endmontage nur noch das Verbindungselement 6 durch den Hohlkörper 16 in Richtung zum Aufnahmeelement 7 geführt werden muss, um mit dem Rastelement 9 verrastet zu werden.

Das Rastelement 9 ist hülsenartig in der Art eines Hohlzylinders mit einer oben angeordneten Rastkante 20 ausgeführt, wobei sich die Rastkante 20 radial in Richtung zu einem Mittelpunkt so erstreckt, dass eine Durchgriffsöffnung 21 für die Verbindungsseite 10 des Kugelsperrbolzens 6 gebildet ist. Die Rastkante 20 ist wie am besten in den Figur 4 und 5 bis 7 erkennbar nach unten versetzt, so dass ein noch oben orientierter Anschlag 22 gebildet ist, an welchen sich das untere freie Ende 23 des Hohlkörpers 16 anlegen kann, wobei der Außenumfang des Hohlkörpers 16 an dem Innenumfang des Rastelementes 9 anliegen kann, wie beispielhaft in Figur 2 aber auch in den Figuren 6 und 7 gezeigt ist.

Das Verbindungselement 6 weist an seiner Betätigungsseite 11 einen Flanschfortsatz 24 auf, mit welchem der Kugelsperrbolzen 6 an der Oberfläche des Formatteils 5 auflegbar ist, so dass quasi ein Widerlager für den Kugelsperrbolzen 6 gebildet ist. In den Figuren 2 bis 4 ist der Flanschfortsatz beispielhaft auf dem oberen freien Ende 25 des Hohlkörpers 16 aufgelegt, wobei der Hohlkörper 16 in sinnvoller Art in den Durchgriffsöffnungen des betreffenden Bauelementes 17 und 18 festgelegt ist. Der Hohlkörper 16 überragt mit seinen freien Enden 23 und 25 zum einen das zugeordnete untere Bauelement 18 als auch das zugeordnete obere Bauelement 17.

In Figur 6, welche den unteren Bildausschnitt aus Figur 2 zeigt, ist erkennbar, dass die Sperrelemente 12 unter die Rastkante 20 greifen, wobei das untere freie Ende 23 des Hohlkörpers 16 an dem Anschlag 22 anliegen. Der Flanschfortsatz ist an dem oberen freien Ende 25 festgelegt, so dass das Formatteil 5 entsprechend den Betriebsbedingungen der Behälterbehandlungsanlage 1 genügend lagesicher montiert ist.

In den Figuren 2 bis 4 weisen die jeweils zum rechten Blattrand orientierten Pfeile 26 die einzelnen Schritte zur Demontage des Formatteils 5. Analog weisen die entgegengesetzt orientierten Pfeile 27 die einzelnen Schritte zur Montage des Formatteils.

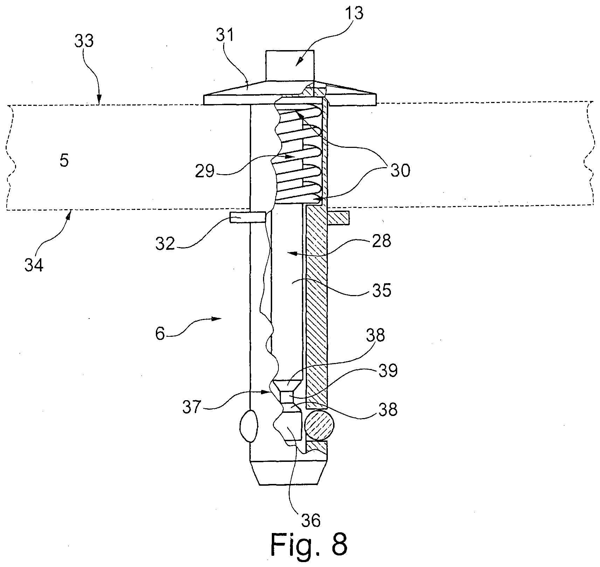

Figur 8 zeigt das Verbindungselement 6 in der beispielhaften Ausgestaltung als Kugelsperrbolzen 6 als Einzelheit. Das Verbindungselement 6 weist die Verbindungsseite 10 sowie die dazu gegenüberliegende Betätigungsseite 6 auf. In dem Hohlkörper 14 ist der Betätigungsmechanismus 28 angeordnet.

Der Betätigungsmechanismus 28 weist betätigungsseitig den Druckknopf 13 auf, welcher auf eine Feder 29 bzw. einen federbelasteten Stößel 35 wirkt. Im gezeigten Beispiel ist die Feder 29 sowohl kopf- als auch fußseitig in einem Federsitz 30 gehalten, wobei der Hohlkörper 14 betätigungsseitig in seiner Wandstärke bezogen auf verjüngt ist, um den jeweiligen Federsitz 30 in der Art eines Vorsprunges und um den Aufnahmeraum für die Feder 29 zu bilden.

Erkennbar ist, dass das Verbindungselement 6 betätigungsseitig lagesicher an dem Formatteil 5 gehalten ist, wobei das Formatteil 5 in dem Ausführungsbeispiel nach Figur 8 einteilig unter Verzicht auf ein oberes und unteres Bauelement ausgeführt ist. Beispielhaft weist das Verbindungselement 6 ein Anlageelement 31 und einen Anlageflansch 32 auf. Das Anlageelement 31 ist druckknopfseitig angeordnet, und liegt an einer Oberseite 33 des Formatteils 5 auf. Dazu gegenüberliegend ist der Anlageflansch 32 an einer Unterseite 34 vorgesehen. Das Anlageelement 31 kann beispielhaft mit dem Hohlkörper 14 verschraubt oder andersartig verbunden werden, so dass das Verbindungselement 6 zunächst von der Unterseite 34 her durch die entsprechende Öffnung im Formatteil 5 geschoben werden kann, bis der Anlageflansch 32 an der Unterseite 34 anliegt, so dass das Verbindungselement 6 durch Verbinden des Anlageelementes 31 mit dem Hohlkörper 14 lagesicher gehalten ist.

Der Betätigungsmechanismus 28 weist weiter einen Stößel 35 auf, welcher durch den Druckknopf 13 betätigt auf ein verbindungsseitig angeordnetes Wirkelement 36 einwirkt. Das Wirkelement 36 steht in unmittelbarer Wirkverbindung mit den Sperrkugeln 12. Zwischen dem Stößel 35 und dem Wirkelement 36 ist noch ein Arretierelement 37 vorgesehen, welches zwei gegenläufig konusförmig ausgeführte Bereiche 38 und ein Zwischenelement 39 aufweist. Die konusförmigen Bereiche 38 verjüngen sich jeweils auf den Durchmesser des Zwischenelementes 39.

Wird nun der Druckknopf 13 betätigt wird der Stößel 35 in Richtung zur Verbindungsseite 10 verschoben und wirkt auf das Wirkelement 36, welches aus seiner neutralen Position, in welcher die Sperrkugeln 12 frei sind, in seine Festlegeposition überführt wird, und in dieser gehalten wird. In der Festlegeposition werden die Sperrkugeln 12 aus dem Hohlkörper heraus getrieben, und in radialer Richtung bewegungsfrei festgelegt, so dass das Verbindungselement 6, also der Kugelsperrbolzen 6 durch Anlage der Sperrkugeln unter der Rastkante 20 (Figur 6) festgelegt ist. Durch abermaliges Betätigen des Druckknopfes 13 wird das Wirkelement 36 in seine neutrale Position zurückgeführt, so dass die Sperrkugeln 12 in radialer Richtung des Hohlkörpers 14 frei sind, so dass das Verbindungselement aus dem Rastelement 9 entnommen werden kann, indem die Sperrkugeln 12 nach Innen in den Hohlkörper 14 ausweichen können (Figur 7). Andererseits kann das Verbindungselement bei entriegelten Sperrkugeln 12 in das Rastelement 9 eingesetzt werden.

Um ein Verkannten des Formatteils beim Einfügen oder Lösen zu verhindern, ist bei einer verbesserten, nicht dargestellten Ausführungsform vorgenannter Verbindungselemente vorgesehen, dass statt des Druckknopfes 13 bzw. für mehrere oder alle Druckknöpfe 13 eines Formatteils 5, eine Druckluftzuführung und - leitung vorgesehen wird. Dabei ist der obere Teil des Verbindungselements 6 als Druckkammer ausgeführt, in welcher die obere Anschlagplatte (analog Federsitz 30) der Druckfeder 29 axial verschiebbar gelagert und ggf. entsprechend abgedichtet ist. Vergleichbare mit dem Stößel 35 wirkmäßig zusammenwirkende, verfahrbare Zylinder sind denkbar.

Mittels eines zentralen Stellventils oder mehrerer dezentraler Stellventile kann somit ein einzelnes Verbindungselement pneumatisch entriegelt werden oder dies für eine Gruppe oder alle Verbindungselemente gleichzeitig vorgenommen werden. Dabei sind beispielsweisen die Stellventile auf dem Formatteil selbst angeordnet, so dass der Bediener beim Lösen der Vormatteile diese unmittelbar halten und entnehmen bzw. einsetzten kann.

Idealerweise ist die Hochdruckleitung nicht permanent mit dem Formatteil bzw. einem oder den Verbindungselementen oder vorgenannten Stellventilen verbunden, sondern kann bedarfsweise über eine Schnellkupplung mit einer Druckleitung, z.B. mittels eines Druckschlauches, hiermit verbunden werden.

Vorstehen ist davon ausgegangen worden, dass ein oder mehrere Verbindungselemente integraler Bestendteil eines Formatteils sind. Insgesamt gilt aber für alle vorgenannten Ausführungsvarianten, dass die beschriebenen Verbindungselemente natürlich zum Einen Teil der Formatteile sein können oder auch eine Baueinheit mit den Aufnahmeelementen bilden können. Im letzteren Fall gilt dann verglichen mit vorgenannten Ausführungen in analoger Weise, dass die Anordnung, Lage und Ausrichtung von Aufnahmeelement und Verbindungselement vertauscht werden.

**Bezugszeichenliste**

| | | | |
|---|---|---|---|
| 1 | Behälterbehandlungsanlage/-maschine | 19 | Abstandselement |
| | | 20 | Rastkante |
| 2 | Schneckenförderer | 21 | Durchgriffsöffnung von 9 |
| 3 | Behälter/Flaschen | 22 | Anschlag |
| 4 | Transportstern | 23 | Freies Ende von 16 |
| 5 | Formatteil | 24 | Flanschfortsatz |
| 6 | Verbindungselement/ Kugelsperrbolzen | 25 | Oberes freies Ende von 16 |
| | | 26 | Demontagepfeile |
| 7 | Aufnahmeelement | 27 | Montagepfeile |
| 8 | Pfeile | 28 | Betätigungsmechanismus |
| 9 | Rastelement | 29 | Feder |
| 10 | Verbindungsseite von 6 | 30 | Federsitz |
| 11 | Betätigungsseite von 6 | 31 | Anlageelement |
| 12 | Sperrkugeln | 32 | Anlageflansch |
| 13 | Betätigungselement/ Druckknopf | 33 | Oberseite |
| | | 34 | Unterseite |
| 14 | Hohlkörper | 35 | Stößel |
| 15 | Betätigungspfeil für 13 | 36 | Wirkelement |
| 16 | Hohlkörper | 37 | Arretierelement |
| 17 | Oberes Bauelement von 5 | 38 | Konusförmige Bereiche |
| 18 | Unteres Bauelement von 5 | 39 | Zwischenelement |

## Patentansprüche

1. Behälterbehandlungsanlage aufweisend zumindest ein Formatteil (5) mit zumindest einem Verbindungselement, wobei das Formatteil (5) über das zumindest eine Verbindungselement (6) mit einem Aufnahmeelement (7) lösbar verbindbar ist, wobei
das Verbindungselement (6) als Sperrbolzen (6) ausgeführt ist, wobei an dem Aufnahmeelement (7) ein Rastelement (9) vorgesehen ist, wobei das Verbindungselement (6) das Formatteil (5) durchgreift, und wobei das Verbindungselement (6) mit seiner Verbindungsseite (10) mit dem Rastelement (9) lösbar verbindbar ist, und wobei das Formatteil (5) parallel zur Hochachse der Behälterbehandlungsanlage (1) montierbar und demontierbar ist, wobei ein Hohlkörper (16) vorgesehen ist, durch welchen sich das Verbindungselement (6) erstreckt, **dadurch gekennzeichnet, dass** das Rastelement (9) hülsenartig ausgeführt ist und eine Rastkante (20) aufweist, die in der Höhe versetzt ist, so dass ein Anschlag gebildet ist, an welchem sich ein unteres freies Ende (23) des Hohlkörpers (16) anlegen kann.

2. Behälterbehandlungsanlage nach Anspruch 1, **dadurch gekennzeichnet, dass** das Verbindungselement (6) an seiner Verbindungsseite (10) Sperrelemente in der Ausgestaltung als Sperrkugeln oder Sperrriegel aufweist.

3. Behälterbehandlungsanlage nach Anspruch 1 oder 2, **dadurch gekennzeichnet, dass** das Formatteil (5) zumindest eine Durchgriffsbohrung für das Verbindungselement (6) aufweist.

4. Behälterbehandlungsanlage nach einem der vorhergehenden Ansprüche, **dadurch gekennzeichnet, dass** das Formatteil (5) Bauelemente (17,18) aufweist, zwischen welchen Abstandselemente (19) und/oder Hohlkörper (16) angeordnet sind.

5. Behälterbehandlungsanlage nach einem der vorhergehenden Ansprüche, **dadurch gekennzeichnet, dass** mindestens Verbindungselement (6) eine Druckluftzuführung und/oder -leitung aufweist, sowie eine Druckkammer welche mit der Druckluftzuführung und/oder -leitung verbunden ist, und in welcher ein federbelasteter und mit einem Stößel (35) wirkmäßig verbundener Zylinder axial verschiebbar gelagert ist.

6. Behälterbehandlungsanlage nach Anspruch 5, **dadurch gekennzeichnet, dass** mindestens eine Druckluftzuführung und/oder -leitung eines Verbindungselementes (6) mit einem zentralen Stellventil oder eine Gruppe von Druckluftzuführungen und/oder -leitungen von mehreren Verbindungselementen (6) mit einem zentralen Stellventil zur pneumatischen Betätigung, insb. Entriegelung, verbunden sind.

7. Behälterbehandlungsanlage nach Anspruch 6, **dadurch gekennzeichnet, dass** das Stellventil an dem Formatteil (5) angeordnet ist.

8. Behälterbehandlungsanlage nach Anspruch 5 oder 6, **dadurch gekennzeichnet, dass** Stellventil über eine Verbindung, insb. Schnellkupplung, mit einer zentralen Druckluftquelle verbindbar ist.

## Claims

1. Container processing plant comprising at least one format part (5) with at least connecting element, wherein the format part (5) can be separably connected by means of at least one connecting element (6) to a receiving element (7), wherein
the connecting element (6) is designed as a locking pin (6), wherein a latch element (9) is provided on the retaining element (7), wherein the connecting element (6) reaches through the format part (5), and wherein the connecting element (6) can be separably connected by its connection side (10) to the latch element (9), and wherein the format part (5) can be fitted and removed parallel to the vertical axis of the container processing plant (1), wherein a hollow body (16) is provided, through which the connecting element (6) extends, **characterised in that** the latch element (9) is configured in the form of a sleeve and comprises a latch edge (20) which is displaceable in its height, such that a stop is formed, at which a lower free end (23) of the hollow body (16) can come in contact.

2. Container processing plant according to claim 1, **characterised in that** the connecting element (6) comprises on its connection side (10) blocking elements in the form of blocking spheres or blocking bars.

3. Container processing plant according to claim 1 or 2, **characterised in that** the format part (5) exhibits at least one passage hole for the connecting element (6).

4. Container processing plant according to any one of the preceding claims, **characterised in that** the format part (5) comprises structural elements (17, 18), between which spacer elements (19) and/or hollow bodies (16) are arranged.

5. Container processing plant according to any one of the preceding claims,
**characterised in that** at least one connecting element (6) comprises a compressed air feed and/or compressed air line, as well as a pressure chamber which is connected to the compressed air feed and/or compressed air line, and in which a spring-loaded cylinder operationally connected to a tappet (35) is mounted such as to be axially displaceable.

6. Container processing plant according to claim 5, **characterised in that** at least one compressed air feed and/or compressed air line of a connecting element (6) are connected to a central adjustment valve or a group of compressed air feeds and/or compressed air lines of a plurality of connecting elements (6) are connected to a central adjustment valve for pneumatic actuation, in particular for unlocking.

7. Container processing plant according to claim 6, **characterised in that** the adjustment valve is arranged at the format part (5).

8. Container processing plant according to claim 5 or 6, **characterised in that** the adjustment valve can be connected to a central compressed air source by means of a connecting element, in particular a quick-action coupling.

## Revendications

1. Installation de traitement de récipient présentant au moins une partie de format (5) avec au moins un élément de raccordement, dans laquelle la partie de format (5) peut être raccordée de manière amovible par le biais de l'au moins un élément de raccordement (6) à un élément de réception (7), dans laquelle
l'élément de raccordement (6) est réalisé comme un boulon de blocage (6), dans laquelle sur l'élément de réception (7) est prévu un élément d'encliquetage (9), dans laquelle l'élément de raccordement (6) traverse la partie de format (5), et dans laquelle l'élément de raccordement (6) peut être raccordé de manière amovible avec son côté de raccordement (10) à l'élément d'encliquetage (9), et dans laquelle la partie de format (5) peut être montée et démontée parallèlement à l'axe vertical de l'installation de traitement de récipient (1), dans laquelle un corps creux (16) est prévu, au travers duquel l'élément de raccordement (6) s'étend, **caractérisée en ce que** l'élément d'encliquetage (9) est réalisé comme une douille et présente une arête d'encliquetage (20) qui est déplacée en hauteur de sorte qu'une butée soit formée, sur laquelle une extrémité libre inférieure (23) du corps creux (16) peut se placer.

2. Installation de traitement de récipient selon la revendication 1, **caractérisée en ce que** l'élément de raccordement (6) présente sur son côté de raccordement (10) des éléments de blocage configurés comme billes de blocage ou verrou de blocage.

3. Installation de traitement de récipient selon la revendication 1 ou 2, **caractérisée en ce que** la partie de format (5) présente au moins un perçage débouchant pour l'élément de raccordement (6).

4. Installation de traitement de récipient selon l'une des revendications précédentes, **caractérisée en ce que** la partie de format (5) présente des éléments structurels (17, 18) entre lesquels des éléments d'écartement (19) et/ou des corps creux (16) sont agencés.

5. Installation de traitement de récipient selon l'une des revendications précédentes, **caractérisée en ce qu'**au moins l'élément de raccordement (6) présente une alimentation en air comprimé et/ou conduite d'air comprimé, ainsi qu'une chambre de pression qui est raccordée à l'alimentation en air comprimé et/ou conduite d'air comprimé, et dans laquelle un cylindre sollicité par ressort et raccordé activement à un coulisseau (35) est logé de manière mobile axialement.

6. Installation de traitement de récipient selon la revendication 5, **caractérisée en ce qu'**au moins une alimentation en air comprimé et/ou conduite d'air comprimé d'un élément de raccordement (6) sont raccordés à une soupape de réglage centrale ou un groupe d'alimentations en air comprimé et/ou conduites d'air comprimé par plusieurs éléments de raccordement (6) à une soupape de réglage centrale pour l'actionnement pneumatique, en particulier le déverrouillage.

7. Installation de traitement de récipient selon la revendication 6, **caractérisée en ce que** la soupape de réglage est agencée sur la partie de format (5).

8. Installation de traitement de récipient selon la revendication 5 ou 6, **caractérisée en ce que** la soupape de réglage peut être raccordée par un raccordement, en particulier un couplage rapide, à une source d'air comprimé centrale.
